(19) Europäisches Patentamt
European Patent Office
Office européen des brevets

(11) **EP 3 899 446 B1**

(12) **EUROPÄISCHE PATENTSCHRIFT**

(45) Veröffentlichungstag und Bekanntmachung des Hinweises auf die Patenterteilung:
**04.01.2023  Patentblatt 2023/01**

(21) Anmeldenummer: **19806230.9**

(22) Anmeldetag: **21.11.2019**

(51) Internationale Patentklassifikation (IPC):
*G01N 9/32* (2006.01)     *G01F 1/74* (2006.01)
*G01F 1/84* (2006.01)     *G01F 15/02* (2006.01)
*G01N 9/00* (2006.01)

(52) Gemeinsame Patentklassifikation (CPC):
**G01F 1/74; G01F 1/8436; G01F 15/022;
G01N 9/00; G01N 9/002; G01N 9/32;**
G01N 2009/006

(86) Internationale Anmeldenummer:
**PCT/EP2019/082050**

(87) Internationale Veröffentlichungsnummer:
**WO 2020/126287 (25.06.2020 Gazette 2020/26)**

(54) **VERFAHREN ZUM ERMITTELN EINES PHYSIKALISCHEN PARAMETERS EINER MIT GAS BELADENEN FLÜSSIGKEIT**

METHOD FOR ASCERTAINING A PHYSICAL PARAMETER OF A GAS-CHARGED LIQUID

PROCÉDÉ POUR DÉTERMINER UN PARAMÈTRE PHYSIQUE D'UN LIQUIDE CHARGÉ EN GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2018  DE 102018133534
18.03.2019  DE 102019106762**

(43) Veröffentlichungstag der Anmeldung:
**27.10.2021  Patentblatt 2021/43**

(73) Patentinhaber: **Endress + Hauser Flowtec AG
4153 Reinach (CH)**

(72) Erfinder:
• **ZHU, Hao
85354 Freising (DE)**

• **DRAHM, Wolfgang
85435 Erding (DE)**
• **RIEDER, Alfred
84032 Landshut (DE)**

(74) Vertreter: **Hahn, Christian et al
Endress+Hauser Group Services
(Deutschland)AG +Co. KG
Colmarer Straße 6
79576 Weil am Rhein (DE)**

(56) Entgegenhaltungen:
**EP-B1- 1 889 010          WO-A1-98/31990
DE-A1-102009 002 941    DE-A1-102015 122 661
DE-A1-102016 005 547    DE-A1-102016 112 002
US-A1- 2016 041 286      US-B1- 6 327 914**

**Beschreibung**

Die vorliegende Erfindung betrifft ein Verfahren zum Ermitteln eines Dichtemesswerts und / oder Massedurchflussmesswerts einer mit Gas beladenen Flüssigkeit mittels eines Messaufnehmers mit mindestens einem Messrohr zum Führen der mit Gas beladenen Flüssigkeit, wobei das Messrohr einen einlassseitigen Endabschnitt und einen auslassseitigen Endabschnitt aufweist, wobei der Messaufnehmer mindestens eine einlassseitige Fixiervorrichtung und eine auslassseitige Fixiervorrichtung aufweist, mit denen das Messrohr jeweils in einen der Endabschnitte fixiert ist, wobei das Messrohr zwischen den beiden Fixiervorrichtungen zu Schwingungen anregbar ist, wobei aus dem Schwingungsverhalten des Messrohrs Massedurchfluss und Dichte der mit Gas beladenen Flüssigkeit bestimmbar sind. Die Messwerte für Massedurchfluss und Dichte weisen jedoch Querempfindlichkeiten zur Schallgeschwindigkeit bzw. Kompressibilität der mit Gas beladenen Flüssigkeit auf, welche mit zunehmender Gasbeladung steigt. Eine Kompensation dieser Querempfindlichkeiten ist daher erwünscht.

Aus der Veröffentlichung WO 01/01086 A1 ein Verfahren zur Kompressibilitätskompensation bei der Massedurchflussmessung in einem Coriolis Massedurchflussmesser bekannt, dabei wird jeweils eine Massedurchflussmessung bei zwei unterschiedlichen Moden durchgeführt, von denen einer ein Biegeschwingungsmode und ein anderer ein Radialmode ist. Aus dem Vergleich der Massedurchflusswerte die mittels dieser beiden Moden ermittelt werden. Dies ist jedoch insofern ein problematischer Ansatz, als die Radialmodeschwingungen erhebliche Abhängigkeit vom Strömungsprofil und vom statischen Druck aufweisen zudem sind mehr Sensoren als die üblichen zwei erforderlich, um sowohl Biegeschwingungen als auch Radialmodeschwingungen erfassen zu können. Gleichermaßen ist eine komplexere Erregerstruktur erforderlich.

In erster Näherung kann der Zusammenhang eines vorläufigen Dichtewerts $\rho_i$ einer mit Gas beladenen Flüssigkeit auf Basis der Eigenfrequenz $f_i$ eines fi-Modes beschrieben werden als:

$$\rho_i = c_{0i} + c_{1i}\frac{1}{f_i^2} + c_{2i}\frac{1}{f_i^4},$$

wobei $c_{0i}$, $c_{1i}$, und $c_{2i}$, modenabhängige Koeffizienten sind.

Die obige Näherung berücksichtigt jedoch nicht die Einflüsse der schwingenden mit Gas beladenen Flüssigkeit im Messrohr. Je näher die Resonanzfrequenz der schwingenden mit Gas beladenen Flüssigkeit an der Eigenfrequenz eines Biegeschwingungsmodes liegt, desto stärker ist die Beeinflussung der Eigenfrequenz. Da die Resonanzfrequenz gewöhnlich oberhalb der Eigenfrequenz der Messrohre liegt, ist der Einfluss auf den $f_3$-Biegeschwingungsmode größer als der Einfluss auf den $f_1$-Biegeschwingungsmode. Dies führt zu unterschiedlichen vorläufigen modenspezifischen Dichtewerten, wobei das Verhältnis zwischen den vorläufigen Dichtewerten die Möglichkeit eröffnet, den Einfluss der schwingenden mit Gas beladenen Flüssigkeit zu ermitteln und zu korrigieren. Dies ist in der Offenlegungsschrift mit dem Aktenzeichen DE 10 2015 122 661 A1 beschrieben. Wenn jedoch die Resonanzfrequenz der mit Gas beladenen Flüssigkeit mit einer Eigenfrequenz eines Biegeschwingungsmodes übereinstimmt, wird dieser vollständig unterdrückt. Damit kann in dieser Situation mit dem zuvor beschriebenen Ansatz nicht gearbeitet werden. Die Offenlegungsschrift DE 10 2016 005 547 A1 schlägt in dieser Situation vor, einen Wert für die Eigenfrequenz des unterdrückten Biegeschwingungsnutzmodes durch Multiplikation der Eigenfrequenz des anregbaren Biegeschwingungsnutzmodes mit einem Faktor zu ermitteln. Dies ermöglicht zwar eine gewisse Verbesserung der Messgenauigkeit, da aber die auszuwertende Information gerade in dem Frequenzverhältnis enthalten ist, bedeutet die Ermittlung der unbekannten zweiten Frequenz durch die Multiplikation einer ersten Eigenfrequenz mit einem zu schätzenden nicht exakt verfügbaren Faktor, dass man letztlich mit einem mehr oder weniger zutreffenden Modell das Messergebnis beeinflusst.

Es ist daher die Aufgabe der vorliegenden Erfindung, für diese Situation eine verbesserte Lösung anzugeben.

Die Aufgabe wird erfindungsgemäß gelöst durch das Verfahren gemäß dem unabhängigen Patentanspruch 1.

Das erfindungsgemäße Verfahren dient zum Ermitteln eines Dichtemesswerts und / oder Massedurchflussmesswerts einer Flüssigkeit, welche eine Gasbeladung aufweist, wobei das Gas insbesondere in Form von suspendierten Blasen in der Flüssigkeit vorliegt, mittels eines Messaufnehmers mit mindestens einem Messrohr zum Führen des Mediums, wobei das mindestens eine Messrohr einen einlassseitigen Endabschnitt und einen auslassseitigen Endabschnitt aufweist, wobei der Messaufnehmer mindestens eine einlassseitige Fixiervorrichtung und eine auslassseitige Fixiervorrichtung aufweist, mit denen das Messrohr jeweils in einen der Endabschnitte fixiert ist, wobei das Messrohr zwischen den beiden Fixiervorrichtungen zum Schwingen in mindestens einem Biegeschwingungsmode anregbar ist, wobei das Verfahren die folgenden Schritte umfasst: Anregen des Messrohrs mit einer Eigenfrequenz eines Biegeschwingungsmodes, insbesondere des Biegeschwingungsnutzmodes bzw. $f_1$-Modes; Ermitteln einer unterdrückten Anregungsfrequenz, bei welcher die Schwingungsamplitude des Messrohrs minimal ist bzw. verschwindet; Identifizieren der unterdrückten Anregungsfrequenz mit der Resonanzfrequenz der mit Gas beladenen Flüssigkeit; Ermitteln eines Dichtekorrekturterms als Funktion der Resonanzfrequenz zur Korrektur eines vorläufigen Dichtemesswerts und/oder eines Massedurchflusskorrekturterms als Funktion der Resonanzfrequenz zur Korrektur eines vorläufigen Massedurchflussmesswerts, und/oder Ermitteln der Schallgeschwindigkeit der mit Gas beladenen Flüssigkeit im Messrohr als Funktion der Resonanzfrequenz; und Ermitteln eines vorläufigen Dichtemesswerts und/oder eines vorläufigen Massedurchflussmesswerts bei der Eigenfrequenz des angeregten Biegeschwingungsmodes, und Ermitteln eines korrigierten Dichtemesswerts und/oder eines korrigierten Massedurchflussmesswerts unter Verwendung des Dichtekorrekturterms und/oder des Massedurchflusskorrekurterms, wobei der Dichtekorrekturterm und/oder der Massedurchflusskorrekurterm eine Funktion der Resonanzfrequenz und der Eigenfrequenz des angeregten Biegeschwingungsmodes sind bzw. ist, bei welcher der vorläufige Dichtemesswert und/oder der vorläufige Massedurchflussmesswert ermittelt wurden bzw. wurde, wobei die unterdrückte Anregungsfrequenz ermittelt wird mittels: Anregen von Schwingungen mit einem Anregungssignal in Form von weißem Rauschen; Erfassen der resultierenden zeitabhängigen Auslenkung des Messrohrs; Transformieren der zeitabhängigen Auslenkung des Messrohrs in den Frequenzraum, insbesondere mittels einer FFT; Ermitteln der Frequenz eines Amplitudenminimums; und Identifizieren der ermitteln Frequenz mit der unterdrückten Anregungsfrequenz.

In einer Weiterbildung der Erfindung wird die unterdrückte Anregungsfrequenz durch Abtasten eines Frequenzbereichs ermittelt, wobei das Abtasten des Frequenzbereichs, insbesondere das Ausgeben von Erregersignalen mit einer Folge von Anregungsfrequenzen in dem Frequenzbereich zum Anregen von Messrohrschwingungen, und das Erfassen der frequenzabhängigen Schwingungsamplituden umfasst.

In einer Weiterbildung der Erfindung sind bzw. ist der Dichtekorrekturterm $K_i$ für einen vorläufigen Dichtewert und/oder der Massedurchflusskorrekturterm eine Funktion eines Quotienten aus der Resonanzfrequenz der mit Gas beladenen Flüssigkeit und der Eigenfrequenz des angeregten Biegeschwingungsmodes, bei welcher der vorläufige Dichtemesswert und / oder Massedurchflussmesswert ermittelt wurden bzw. wurde.

In einer Weiterbildung der Erfindung weist der Dichtekorrekturterm $K_i$ für die vorläufigen Dichtewerte $\rho_i$ auf Basis der Eigenfrequenz des $f_i$-Modes folgende Form auf:

$$K_i := \left(1 + \frac{r}{\left(\frac{f_{res}}{f_i}\right)^2 - b}\right),$$

wobei

$$\rho_{corr} := \frac{\rho_i}{K_i}$$

wobei r eine medienunabhängige Konstante ist, $f_{res}$ die

Resonanzfrequenz der mit Gas beladenen Flüssigkeit ist, $f_i$ die Eigenfrequenz des angeregten Biegeschwingungsmodes ist, $\rho_{corr}, \rho_i$ die korrigierte und die vorläufige Dichte sind, und b eine Skalierungskonstante ist. In einer Ausgestaltung dieser Weiterbildung gilt: r/b < 1, insbesondere r/b < 0,9, wobei insbesondere gilt: b = 1.

In einer Weiterbildung der Erfindung ist g ein vom Durchmesser des Messrohrs abhängiger Proportionalitätsfaktor zwischen einer Resonanzfrequenz $f_{res}$ der mit Gas beladenen Flüssigkeit und der Schallgeschwindigkeit der mit Gas beladenen Flüssigkeit, wobei gilt,

$$c = \frac{f_{res}}{g},$$

und ein gemäß der Gleichung ermittelter Wert der Schallgeschwindigkeit ausgegeben wird.

In einer Weiterbildung der Erfindung wird der vorläufige Dichtewert auf Basis der Eigenfrequenz des $f_i$-Modes mittels eines Polynoms in $1/f_i$, insbesondere in $(1/f_i)^2$ bestimmt, wobei die Koeffizienten des Polynoms modenabhängig sind.

In einer Weiterbildung der Erfindung gilt für einen Dichtefehler $E_{\rho i}$ eines vorläufigen Dichtewerts auf Basis der Eigenfrequenz des fi-Modes:

$$E_{\rho i} := K_i - 1,$$

wobei ein Massedurchflussfehler $E_m$ eines vorläufigen Massedurchflusswerts proportional zu dem Dichtefehler $E_{\rho 1}$ des ersten vorläufigen Dichtewerts ist, also:

$$E_m := k \cdot E_{\rho 1},$$

wobei der Proportionalitätsfaktor k nicht weniger als 1,9 und nicht mehr als 2,1 beträgt,

wobei der Proportionalitätsfaktor k insbesondere 2 beträgt,

wobei für den Massedurchflusskorrekturterm $K_m$ für den Massendurchfluss gilt:

$$K_m := 1 + E_m,$$

wobei der korrigierte Massendurchfluss $\dot{m}_{corr}$ ermittelt wird als

$$\dot{m}_{corr} := \frac{\dot{m}_v}{K_m},$$

wobei $\dot{m}_v$ der vorläufige Massedurchflusswert ist.

In einer Weiterbildung der Erfindung werden

der $f_1$-Mode und der $f_3$-Mode angeregt, wobei deren Eigenfrequenzen ermittelt, wobei in Abhängigkeit von den ermittelten Eigenfrequenzen ein Frequenzbereich festgelegt wird, in dem nach der unterdrückten Anregungsfrequenz zu suchen ist.

In einer Weiterbildung der Erfindung wird eine Referenzdichte, insbesondere für die flüssige Phase das Mediums bereitgestellt, wobei in Abhängigkeit von der Referenzdichte und ggf. der Eigenfrequenz des $f_1$-Modes ein Frequenzbereich festgelegt wird, in dem nach der unterdrückten Anregungsfrequenz zu suchen ist.

Die Erfindung wird nun anhand des in den Zeichnungen beschriebenen Ausführungsbeispiels näher erläutert.

Es zeigt:

Fig. 1: Ein Flussdiagramm für ein Ausführungsbeispiel des erfindungsgemäßen Verfahrens;

Fig. 2a: Ein Flussdiagramm eine erste Ausgestaltung zur Ermittlung einer unterdrückten Anregungsfrequenz im Ausführungsbeispiel nach Fig. 1; und

Fig. 2b: Ein Flussdiagramm eine zweite Ausgestaltung zur Ermittlung einer unterdrückten Anregungsfrequenz im Ausführungsbeispiel nach Fig. 1

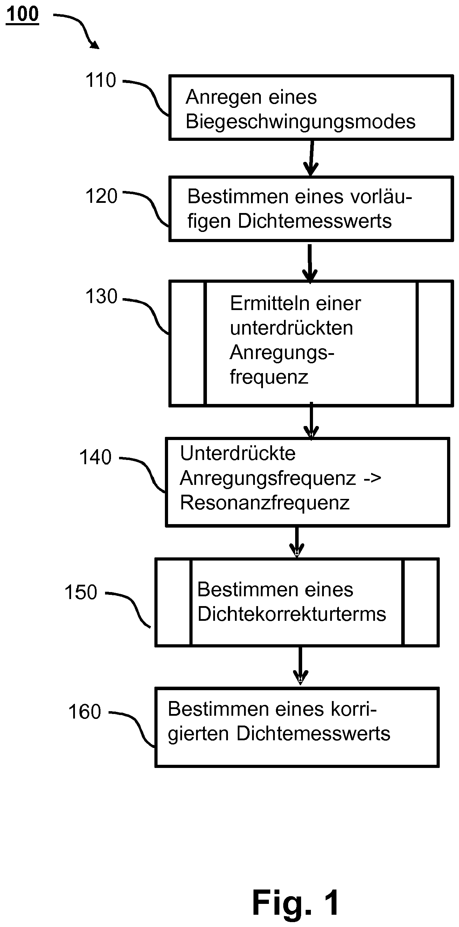

Das in Fig. 1 dargestellte Ausführungsbeispiel eines erfindungsgemäßen Verfahren 100 zum Bestimmen eines Dichtewertes beginnt in einem Schritt 110 mit dem Anregen eines Biegeschwingungsmodes, welches insbesondere der $f_1$-Mode ist, der auch als Biegeschwingungsnutzmode bezeichnet wird.

Dann erfolgt die Bestimmung der Eigenfrequenz des angeregten Biegeschwingungsmodes, beispielsweise des $f_1$-Modes, beispielsweise durch Maximieren des Verhältnisses von der Schwingungsamplitude zur modenspezifischen Erregerleistung. Durch Variieren der Anregungsfrequenzen können die gesuchten Eigenfrequenzen ermittelt werden.

Anhand der ermittelten Eigenfrequenz $f_i$ wird dann in einem Schritt 120 ein vorläufiger Dichtemesswert $\rho_1$ bestimmt als:

$$\rho_i = c_{0i} + c_{1i}\frac{1}{f_i^2} + c_{2i}\frac{1}{f_i^4},$$

wobei $c_{0i}$, $c_{1i}$, und $c_{2i}$, modenabhängige Koeffizienten sind.

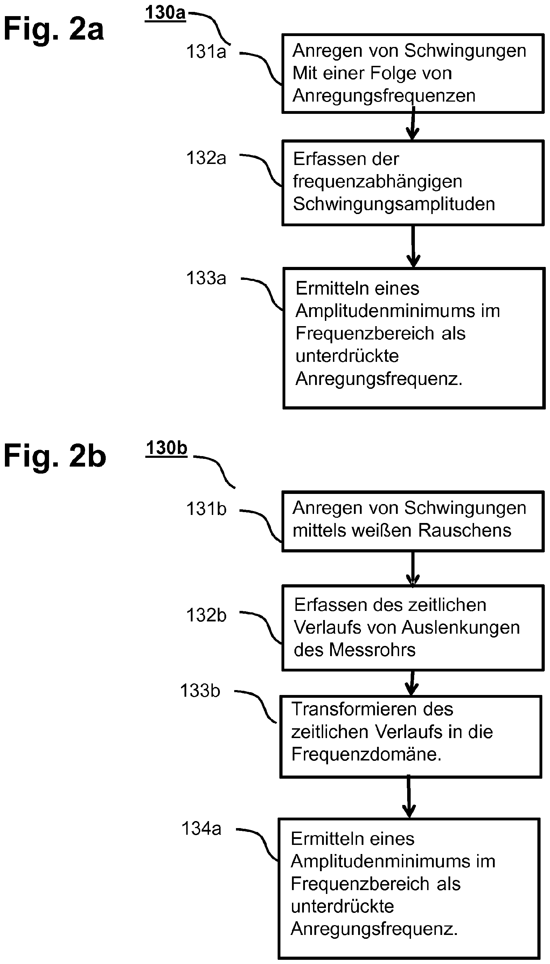

In einem Schritt 130, der weiter unten anhand von Fign. 2a und 2b näher erläutert wird, erfolgt die Bestimmung einer unterdrückten Anregungsfrequenz, welche in einem Schritt 140 als Wert der Resonanzfrequenz fres der mit Gas beladenen Flüssigkeit im Messrohr angesetzt wird.

In einem Schritt 150, erfolgt auf Basis der Eigenfrequenz $f_i$ des Messrohrs und der Resonanzfrequenz $f_{res}$ die Bestimmung eines Dichtekorrekturterms für die Dichtemessung.

Schließlich wird in einem Schritt 160 mittels des Korrekturterms ein korrigierter Dichtewert bestimmt.

Fig. 2a stellt eine erste Ausgestaltung 130a für den Verfahrensschritt zur Ermittlung der unterdrückten Anregungsfrequenz dar.

Es werden Schwingungen mit einer Folge von Anregungsfrequenzen 131a über einen Frequenzbereich angeregt, in dem die unterdrückte Anregungsfrequenz zu erwarten ist. Um den Frequenzbereich zu identifizieren kann beispielsweise auf Basis der vorläufigen Dichte und einem Referenzwert für die Dichte der Flüssigkeit eine grobe Schätzung der Resonanzfrequenz des Mediums erfolgen, wobei um den Schätzwert dann ein Frequenzbereich gewählt wird. In ähnlicher Weise kann aus dem Verhältnis der Eigenfrequenzen, beispielsweise des $f_1$-Modes und des $f_3$-Modes eine Resonanzfrequenz abgeschätzt werden.

Für jede der angeregten Frequenzen wird eine frequenzabhängige Schwingungsamplitude erfasst 132a.

In dem auf diese Weise erstellten Spektrum der Schwingungsamplituden wird dann ein Amplitudenminimum ermittelt, das als die unterdrückte Anregungsfrequenz identifiziert wird 133a.

Fign. 2b stellt eine zweite Ausgestaltung 130b für den Verfahrensschritt zur Ermittlung der unterdrückten Anregungsfrequenz dar.

Hier werden simultan Schwingungen aller Frequenzen mit einem Anregungssignal in Form von weißem Rauschen angeregt 131b, wobei dann eine zeitliche Folge von Schwingungsauslenkungen zu erfassen ist 132b. Eine Fouriertransformation, insbesondere FFT 133b überführt die zeitliche Folge in die Frequenzdomäne, in der dann wie zuvor ein Amplitudenminimum als Funktion der Frequenz ermittelt und als unterdrückte Anregungsfrequenz identifiziert wird 134b. Für jede der angeregten Frequenzen wird eine frequenzabhängige Schwingungsamplitude erfasst 132a.

Zum Bestimmen des Dichtekorrekturterms $K_i$ gemäß Schritt 150 werden die Resonanzfrequenz fres und die zur Ermittlung des vorläufigen Dichtewerts verwendete Eigenfrequenz fi in die folgende Gleichung eingesetzt:

$$K_i := \left(1 + \frac{r}{\left(\frac{f_0}{f_i}\right)^2 - 1}\right),$$

wobei $f_i$ die Eigenfrequenz des nicht unterdrückten Biegeschwingungsmodes ist, mit welcher der vorläufige $\rho_i$ Dichtemesswert bestimmt wurde. Und wobei r eine Konstante ist, die hier den Wert 0,84 aufweist.

Der korrigierte Dichtemesswert $\rho_{corr}$ wird schließlich im Schritt 160 des Verfahrens in Fig. 1 berechnet gemäß:

$$\rho_{corr} = \frac{\rho_i}{K_i}$$

Der vorläufige Dichtewert $\rho_i$ wird also durch den Korrekturterm $K_i$ geteilt, um den korrigierten Dichtewert $\rho_{corr}$ zu erhalten.

**Patentansprüche**

1. Verfahren zum Ermitteln eines Dichtemesswerts und/oder eines Massedurchflussmesswerts einer Flüssigkeit, welche eine Gasbeladung aufweist, wobei das Gas insbesondere in Form von suspendierten Blasen in der Flüssigkeit vorliegt, mittels eines Messaufnehmers mit mindestens einem Messrohr zum Führen des Mediums,

    wobei das mindestens eine Messrohr einen einlassseitigen Endabschnitt und einen auslassseitigen Endabschnitt aufweist,
    wobei der Messaufnehmer mindestens eine einlassseitige Fixiervorrichtung und eine auslassseitige Fixiervorrichtung aufweist, mit denen das Messrohr jeweils in einen der Endabschnitte fixiert ist, wobei das Messrohr zwischen den beiden Fixiervorrichtungen zum Schwingen in mindestens einem Biegeschwingungsmode anregbar ist, wobei das Verfahren (100) die folgenden Schritte umfasst:

    Anregen des Messrohrs mit einer Eigenfrequenz eines Biegeschwingungsmodes (110), insbesondere des Biegeschwingungsnutzmodes bzw. $f_1$-Modes,
    Ermitteln einer unterdrückten Anregungsfrequenz (130), bei welcher die Schwingungsamplitude des Messrohrs minimal ist bzw. verschwindet;
    Identifizieren der unterdrückten Anregungsfrequenz mit der Resonanzfrequenz der mit Gas beladenen Flüssigkeit (140);
    Ermitteln eines Dichtekorrekturterms (150) als Funktion der Resonanzfrequenz zur Korrektur eines vorläufigen Dichtemesswerts und/oder eines Massedurchflusskorrekturterms als Funktion der Resonanzfrequenz zur Korrektur eines vorläufigen Massedurchflussmesswerts, und/oder Ermitteln der Schallgeschwindigkeit der mit Gas beladenen Flüssigkeit im Messrohr als Funktion der Resonanzfrequenz; und
    Ermitteln eines vorläufigen Dichtemesswerts und/oder eines vorläufigen Massedurchflussmesswerts bei der Eigenfrequenz des angeregten Biegeschwingungsmodes, und Ermitteln eines korrigierten Dichtemesswerts und/oder eines korrigierten Massedurchflussmesswerts unter Verwendung des Dichtekorrekturterms und/oder des Massedurchflusskorrekurterms, wobei
    der Dichtekorrekturterm und/oder der Massedurchflusskorrekurterm eine Funktion der Resonanzfrequenz und der Eigenfrequenz des angeregten Biegeschwingungsmodes sind bzw. ist, bei welcher der vorläufige Dichtemesswert und/oder der vorläufige Massedurchflussmesswert ermittelt wurden bzw. wurde;
    **dadurch gekennzeichnet, dass** die unterdrückte Anregungsfrequenz ermittelt wird mittels:

    Anregen von Schwingungen mit einem Anregungssignal in Form von weißem Rauschen;
    Erfassen der resultierenden zeitabhängigen Auslenkung des Messrohrs;
    Transformieren der zeitabhängigen Auslenkung des Messrohrs in den Frequenzraum, insbesondere mittels einer FFT;
    Ermitteln der Frequenz eines Amplitudenminimums; und
    Identifizieren der ermittelten Frequenz mit der unterdrückten Anregungsfrequenz.

2. Verfahren nach Anspruch 1, wobei die unterdrückte Anregungsfrequenz ermittelt wird durch Abtasten eines Frequenzbereichs.

3. Verfahren nach Anspruch 2 wobei das Abtasten des Frequenzbereichs, das Ausgeben von Erregersignalen mit einer Folge von Anregungsfrequenzen in dem Frequenzbereich zum Anregen von Messrohrschwingungen und das Erfassen der frequenzabhängigen Schwingungsamplituden umfasst.

4. Verfahren nach einem der vorhergehenden Ansprüche, wobei der Dichtekorrekturterm $K_i$ für einen vorläufigen Dichtewert und/oder der Massedurchflusskorrekturterm eine Funktion eines Quotienten aus der Resonanzfrequenz der mit Gas beladenen Flüssigkeit und der Eigenfrequenz des angeregten Biegeschwingungsmodes Modes sind bzw. ist, bei welcher der vorläufige Dichtemesswert und/oder Massedurchflussmesswert ermittelt wurden bzw. wurde.

5. Verfahren nach einem der vorhergehenden Ansprüche, wobei der Dichtekorrekturterm $K_i$ für die vorläufigen Dichtewerte $\rho_i$ auf Basis der Eigenfrequenz des $f_1$-Modes folgende Form aufweist:

$$K_i := \left( 1 + \frac{r}{\left(\frac{f_{res}}{f_i}\right)^2 - b} \right),$$

wobei

$$\rho_{corr} := \frac{\rho_i}{K_i}$$

wobei reine medienunabhängige Konstante ist, $f_{res}$ die Resonanzfrequenz der mit Gas beladenen Flüssigkeit ist, $f_i$ die Eigenfrequenz des angeregten Biegeschwingungsmodes ist, $\rho_{corr}$, $\rho_i$ die korrigierte und die vorläufige Dichte sind, und b eine Skalierungskonstante ist.

6. Verfahren nach Anspruch 5, wobei gilt:

r/b < 1, insbesondere r/b < 0,9,
wobei insbesondere gilt: b = 1.

7. Verfahren nach einem der vorhergehenden Ansprüche, wobei g ein vom Durchmesser des Messrohrs abhängiger Proportionalitätsfaktor zwischen einer Resonanzfrequenz $f_{res}$ der mit Gas beladenen Flüssigkeit und der Schallgeschwindigkeit der mit Gas beladenen Flüssigkeit ist, wobei gilt,

$$c = \frac{f_{res}}{g},$$

und ein gemäß der Gleichung ermittelter Wert der Schallgeschwindigkeit ausgegeben wird.

8. Verfahren nach einem der vorhergehenden Ansprüche, wobei die vorläufigen Dichtewerte auf Basis der Eigenfrequenz des des $f_i$-Modes mittels eines Polynoms in $1/f_i$, insbesondere in $(1/f_i)^2$ bestimmt werden, wobei die Koeffizienten des Polynoms modenabhängig sind.

9. Verfahren nach Anspruch 6, wobei für einen Dichtefehler $E_{\rho i}$ eines vorläufigen Dichtewerts auf Basis der Eigenfrequenz des $f_i$-Modes gilt:

$$E_{\rho i} := K_i - 1,$$

wobei ein Massedurchflussfehler $E_m$ eines vorläufigen Massedurchflusswerts proportional zu dem Dichtefehler $E_{\rho 1}$ des ersten vorläufigen Dichtewerts ist, also:

$$E_m := k \cdot E_{\rho 1},$$

wobei der Proportionalitätsfaktor k nicht weniger als 1,9 und nicht mehr als 2,1 beträgt, wobei der Proportionalitätsfaktor k insbesondere 2 beträgt, wobei für den Massedurchflusskorrekturterm $K_m$ für den Massendurchfluss gilt:

$$K_m := 1 + E_m,$$

wobei der korrigierte Massendurchfluss $\dot{m}_{corr}$ ermittelt wird als

$$\dot{m}_{corr} := \frac{\dot{m}_v}{K_m},$$

wobei $\dot{m}_v$ der vorläufige Massedurchflusswert ist.

10. Verfahren nach einem der vorhergehenden Ansprüche, wobei der $f_1$-Mode und der $f_3$-Mode angeregt werden, und deren Eigenfrequenzen ermittelt werden, und wobei in Abhängigkeit von den ermittelten Eigenfrequenzen ein Frequenzbereich festgelegt wird, in dem nach der unterdrückten Anregungsfrequenz zu suchen ist.

11. Verfahren nach einem der vorhergehenden Ansprüche, wobei eine Referenzdichte, insbesondere für die flüssige Phase das Mediums bereitgestellt wird, und wobei in Abhängigkeit von der Referenzdichte und ggf. der Eigenfrequenz des $f_1$-Modes ein Frequenzbereich festgelegt wird, in dem nach der unterdrückten Anregungsfrequenz zu suchen ist.

**Claims**

1. Procedure designed to determine a density measured value and/or a mass flow measured value of a liquid which has a gas load, wherein the gas is present particularly in the form of suspended bubbles in the liquid, using a sensor with at least a measuring tube to conduct the medium,

wherein the at least one measuring tube has an end section on the inlet side and an end section on the outlet side, wherein the sensor comprises at least one fixation unit on the inlet side and one fixation unit on the outlet side, with which the measuring tube is fixed respectively in one of the end sections, wherein the measuring tube can be excited between the two fixation units to vibrate in at least a bending vibration mode, wherein the procedure (100) comprises the following steps:

Excitation of the measuring tube with a natural frequency of a bending vibration mode (110), particularly a bending vibration useful mode of the $f_1$ mode.

Determination of a suppressed excitation frequency (130) at which the vibration amplitude of the measuring tube is minimal or disappears;

Identification of the suppressed excitation frequency with the resonance frequency of the liquid loaded with gas (140);

Determination of a density correction term (150) as a function of the resonance frequency to correct a provisional density measured value and/or a mass flow correction term as a function of the resonance frequency to correct a provisional mass flow measured value, and/or determination of the sound velocity of the liquid loaded with gas in the measuring tube as a function of the resonance frequency; and

Determination of a provisional density measured value and/or a provisional mass flow measured value at the natural frequency of the excited bending vibration mode, and determination of a corrected density measured value and/or of a corrected mass flow measured value using the density correction term and/or the mass flow correction term,

wherein the density correction term and/or the mass flow correction term is/are a function of the resonance frequency and of the natural frequency of the excited bending vibration mode, wherein the provisional density measured value and/or the provisional mass flow measured value have/has been determined in this function; **characterized in that** the suppressed excitation frequency is determined using the following steps:

Excitation of vibrations with an excitation signal in the form of white noise;

Detection of the resulting time-dependent deflection of the measuring tube;

Transformation of the time-dependent deflection of the measuring tube to the frequency domain, particularly using an FFT;

Determination of the frequency of an amplitude minimum; and

Identification of the frequency determined with the suppressed excitation frequency.

2. Procedure as claimed in Claim 1, wherein the suppressed excitation frequency is determined by scanning a frequency range.

3. Procedure as claimed in Claim 2, wherein the scanning of the frequency range comprises the outputting of exciter signals with a sequence of excitation frequencies in the frequency range for the excitation of measuring tube vibrations and the capturing of frequency-dependent vibration amplitudes.

4. Procedure as claimed in one of the previous claims, wherein the density correction term $K_i$ for a provisional density value and/or the mass flow correction term is/are a function of a quotient of the resonance frequency of the liquid loaded with gas and of the natural frequency of the excited bending vibration mode, wherein the provisional density measured value and/or the mass flow measured value is/are determined in said function.

5. Procedure as claimed in one of the previous claims, wherein the density correction term $K_i$ for the provisional density values $\rho_i$ on the basis of the natural frequency of the $f_i$ mode has the following form:

$$K_i := \left( 1 + \frac{r}{\left(\frac{f_{res}}{f_i}\right)^2 - b} \right),$$

where

$$\rho_{corr} := \frac{\rho_i}{K_i}$$

wherein r is a medium-independent constant, $f_{res}$ is the resonance frequency of the liquid loaded with gas, $f_i$ is the natural frequency of the excited bending vibration mode, $\rho_{corr}$, $\rho_i$ are the corrected and provisional densities, and b is a scaling constant.

6. Procedure as claimed in Claim 5, wherein the following applies:

r/b < 1, particularly r/b < 0.9, wherein b = 1 particularly applies.

7. Procedure as claimed in one of the previous claims, wherein g is a proportionality factor that depends on the diameter of the measuring tube, between a resonance frequency $f_{res}$ of the liquid loaded with gas and the sound velocity of the liquid loaded with gas, wherein the following applies:

$$c = \frac{f_{res}}{g},$$

and a value of the sound velocity determined according to the equation is output.

**8.** Procedure as claimed in one of the previous claims, wherein the provisional density values are determined on the basis of the natural frequency of the $f_i$ mode using a polynomial in $1/f_i$, particularly in $(1/f_i)^2$, wherein the coefficients of the polynomial are dependent on the mode.

**9.** Procedure as claimed in Claim 6, wherein the following applies for a density error $E_{\rho i}$ of a provisional density value based on the natural frequency of the $f_i$ mode:

$$E_{\rho i} := k_i - 1,$$

wherein a mass flow error $E_m$ of a provisional mass flow value is proportional to the density error $E_{\rho 1}$ of the first provisional density value, i.e.:

$$E_m := k \cdot E_{\rho 1}$$

wherein the proportionality factor k is not less than 1.9 and not more than 2.1, wherein the proportionality factor k is particularly equal to 2, wherein the following applies for the mass flow correction term $k_m$, for the mass flow:

$$K_m = 1 + E_m,$$

wherein the corrected mass flow $\dot{m}_{corr}$ is determined as follows:

$$\dot{m}_{corr} := \frac{\dot{m}_v}{K_m},$$

wherein $\dot{m}_v$ is the provisional value of the mass flow.

**10.** Procedure as claimed in one of the previous claims, wherein the $f_1$ mode and the $f_3$ mode are excited and their natural frequencies are determined and, depending on the natural frequencies that are determined, a frequency range is determined in which the suppressed excitation frequency is to be sought.

**11.** Procedure as claimed in one of the previous claims, wherein a reference density is provided, particularly for the liquid phase of the medium, and wherein, depending on the reference density and, where applicable, the natural frequency of the $f_1$ mode, a frequency range is determined in which the suppressed excitation frequency is to be sought.

**Revendications**

**1.** Procédé destiné à la détermination d'une valeur mesurée de densité et/ou d'une valeur mesurée de débit massique d'un liquide présentant une charge de gaz, le gaz étant présent notamment sous forme de bulles en suspension dans le liquide, au moyen d'un capteur de mesure avec au moins un tube de mesure destiné à guider le produit,

ledit au moins un tube de mesure présentant une section d'extrémité côté entrée et une section d'extrémité côté sortie, le capteur de mesure comprenant au moins un dispositif de fixation côté entrée et un dispositif de fixation côté sortie, dispositifs avec lesquels le tube de mesure est respectivement fixé dans l'une des parties d'extrémité, le tube de mesure pouvant être excité entre les deux dispositifs de fixation pour vibrer dans au moins un mode de vibration de flexion, le procédé (100) comprenant les étapes suivantes :

Excitation du tube de mesure avec une fréquence propre d'un mode de vibration de flexion (110), notamment du mode de vibration de flexion utile ou du mode $f_1$, Détermination d'une fréquence d'excitation supprimée (130) à laquelle l'amplitude de vibration du tube de mesure est minimale ou disparaît ; Identification de la fréquence d'excitation supprimée avec la fréquence de résonance du liquide chargé de gaz (140) ; Détermination d'un terme de correction de densité (150) en fonction de la fréquence de résonance pour corriger une mesure provisoire de densité et/ou un terme de correction de débit massique en fonction de la fréquence de résonance pour corriger une mesure provisoire de débit massique, et/ou détermination de la vitesse du son du liquide chargé de gaz dans le tube de mesure en fonction de la fréquence de résonance ; et Détermination d'une valeur mesurée de densité provisoire et/ou d'une valeur mesurée de débit massique provisoire à la fréquence propre du mode de vibration de flexion excité, et détermination d'une valeur mesurée de densité corrigée et/ou d'une valeur mesurée de débit massique corrigée en utilisant le terme de correction de densité et/ou le terme de correction de débit massique,

le terme de correction de densité et/ou le terme de correction de débit massique étant une fonction de la fréquence de résonance et de la fréquence propre du mode de vibration de flexion excité, fonction pour laquelle la valeur mesurée de densité provisoire et/ou la valeur mesurée de débit massique provisoire a ou ont été déterminée(s) ;

**caractérisé en ce que**

la fréquence d'excitation supprimée est déterminée au moyen des étapes suivantes :

  Excitation en vibrations avec un signal d'excitation sous forme de bruit blanc ;
  Détection de la déviation résultante du tube de mesure en fonction du temps ;
  Transformation de la déviation du tube de mesure fonction du temps en domaine fréquentiel, notamment au moyen d'une FFT ;

  Détermination de la fréquence d'un minimum d'amplitude ; et
  Identification de la fréquence déterminée avec la fréquence d'excitation supprimée.

2. Procédé selon la revendication 1, pour lequel la fréquence d'excitation supprimée est déterminée par échantillonnage d'une gamme de fréquences.

3. Procédé selon la revendication 2, pour lequel l'échantillonnage de la gamme de fréquences comprend la sortie de signaux d'excitation avec une séquence de fréquences d'excitation dans la gamme de fréquences pour l'excitation en vibrations de tube de mesure et la détection des amplitudes de vibration dépendant de la fréquence.

4. Procédé selon l'une des revendications précédentes, pour lequel le terme de correction de densité $K_i$ pour une valeur de densité provisoire et/ou le terme de correction de débit massique sont une fonction d'un quotient de la fréquence de résonance du liquide chargé de gaz et de la fréquence propre du mode de vibration de flexion excité, fonction pour laquelle la valeur mesurée de densité provisoire et/ou la valeur mesurée de débit massique a/ont été déterminée(s).

5. Procédé selon l'une des revendications précédentes, pour lequel le terme de correction de densité $K_i$ pour les valeurs de densité provisoires $\rho_i$ sur la base de la fréquence propre du mode $f_i$, présente la forme suivante :

$$K_i := \left(1 + \frac{r}{\left(\frac{f_{res}}{f_i}\right)^2 - b}\right),$$

où

$$\rho_{corr} := \frac{\rho_i}{K_i}$$

r étant une constante indépendante du produit, $f_{res}$ étant la fréquence de résonance du liquide chargé de gaz, $f_i$ étant la fréquence propre du mode de vibration de flexion excité, $\rho_{corr}, \rho_i$ étant les densités corrigée et provisoire, et b étant une constante de mise à l'échelle.

6. Procédé selon la revendication 5, pour lequel la relation suivante est valable :

  r/b < 1, notamment r/b < 0,9,
  avec notamment b = 1.

7. Procédé selon l'une des revendications précédentes, pour lequel g est un facteur de proportionnalité, dépendant du diamètre du tube de mesure, entre une fréquence de résonance $f_{res}$ du liquide chargé de gaz et la vitesse du son du liquide chargé de gaz, avec la relation suivante :

$$c = \frac{f_{res}}{g},$$

et une valeur de la vitesse du son déterminée selon l'équation est délivrée.

8. Procédé selon l'une des revendications précédentes, pour lequel les valeurs de densité provisoires sont déterminées sur la base de la fréquence propre du mode $f_i$ au moyen d'un polynôme en $1/f_i$, notamment en $(1/f_i)^2$, les coefficients du polynôme étant dépendants du mode.

9. Procédé selon la revendication 6, pour lequel, pour une erreur de densité $E\rho_i$ d'une valeur de densité provisoire basée sur la fréquence propre du mode $f_i$ :

$$E_{\rho i} := k_i - 1,$$

une erreur de débit massique $E_m$ d'une valeur de débit massique provisoire étant proportionnelle à l'erreur de densité $E_{\rho 1}$ de la première valeur de densité provisoire, c'est-à-dire :

$$E_m := k \cdot E_{\rho 1}$$

où le facteur de proportionnalité k n'est pas inférieur à 1,9 et pas supérieur à 2,1,
où le facteur de proportionnalité k est notamment égal à 2,
où, pour le terme de correction du débit massi-

que $k_m$, la relation suivante est valable pour le débit massique :

$$K_m = 1 + E_m,$$

où le débit massique corrigé $\dot{m}_{corr}$ est déterminé comme suit :

$$\dot{m}_{corr} := \frac{\dot{m}_v}{K_m},$$

où $\dot{m}_v$ est la valeur provisoire du débit massique.

10. Procédé selon l'une des revendications précédentes, pour lequel on excite le mode $f_1$ et le mode $f_3$ et on détermine leurs fréquences propres, et procédé pour lequel on détermine, en fonction des fréquences propres déterminées, une gamme de fréquences dans laquelle il y a lieu de rechercher la fréquence d'excitation supprimée.

11. Procédé selon l'une des revendications précédentes, pour lequel on fournit une densité de référence, notamment pour la phase liquide du produit, et procédé pour lequel on détermine, en fonction de la densité de référence et éventuellement de la fréquence propre du mode $f_1$, une gamme de fréquences dans laquelle il y a lieu de rechercher la fréquence d'excitation supprimée.

**100**

110 — Anregen eines Biegeschwingungsmodes

120 — Bestimmen eines vorläufigen Dichtemesswerts

130 — Ermitteln einer unterdrückten Anregungsfrequenz

140 — Unterdrückte Anregungsfrequenz -> Resonanzfrequenz

150 — Bestimmen eines Dichtekorrekturterms

160 — Bestimmen eines korrigierten Dichtemesswerts

# Fig. 1

**Fig. 2a**   <u>130a</u>

131a → Anregen von Schwingungen
Mit einer Folge von
Anregungsfrequenzen

132a → Erfassen der
frequenzabhängigen
Schwingungsamplituden

133a → Ermitteln eines
Amplitudenminimums im
Frequenzbereich als
unterdrückte
Anregungsfrequenz.

**Fig. 2b**   <u>130b</u>

131b → Anregen von Schwingungen
mittels weißen Rauschens

132b → Erfassen des zeitlichen
Verlaufs von Auslenkungen
des Messrohrs

133b → Transformieren des
zeitlichen Verlaufs in die
Frequenzdomäne.

134a → Ermitteln eines
Amplitudenminimums im
Frequenzbereich als
unterdrückte
Anregungsfrequenz.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0101086 A1
- DE 102015122661 A1
- DE 102016005547 A1